# EUROPEAN PATENT APPLICATION

(11) **EP 4 239 532 A1**
(43) Date of publication of application: **06.09.2023**
(21) Application number: 22163068.4
(22) Date of filing: 18.03.2022
(51) Int. Cl.: G06N 3/08, G06N 3/04

(54) **SIMILARITY GUIDED PROGRESSIVE DECODER FUSION IN NEURAL NETWORKS DEEP LEARNING**

(30) Priority: 03.03.2022 US 202217686273
(71) Applicant: NavInfo Europe B.V., 5657 DB Eindhoven (NL)
(72) Inventor: Gurulingan, Naresh Kumar, Eindhoven (NL); Arani, Elahe, Eindhoven (NL); Zonooz, Bahram, Eindhoven (NL)
(74) Representative: van Breda, Jacobus

(57) **Abstract**

A deep learning framework in multi-task learning for finding a sharing scheme of representations in the decoder to best curb task interference while benefiting from complementary information sharing. The invention is embodied by a deep-learning based computer-implemented method for multi-task learning, wherein said method comprise the step of progressively fusing decoders, by grouping tasks stage-by-stage based on a pairwise similarity matrix between learned representations of different task decoders.

## Description

The invention relates to a computer-implemented method in deep-learning of neural networks for reducing task interference in multi-task networks.

### General description

Obtaining real time predictions from neural networks is imperative for time critical applications such as autonomous driving. These applications also require predictions from multiple tasks to shed light on varied aspects of the input scene. Multi-Task Networks (MTNs) can elegantly combine these two requirements by jointly predicting multiple tasks while sharing a considerable number of parameters among tasks. On the other hand, training separate single task networks could lead to different task predictions contradicting with each other. Also, each of these networks has to be individually robust to various forms of adverse inputs such as image corruptions and adversarial attacks. MTNs include an inductive bias in the shared parameter space which encourages tasks to share complementary information with each other to improve predictions. This information sharing also enables tasks to provide consistent predictions while holding the potential to provide improved robustness [1].

The inductive bias of sharing parameters among different tasks provided by a multi-task network is indeed desirable as it enables complementary information sharing. However, the side effect is that tasks could also share conflicting task information thereby interfering with each other. This task interference leads to reduced overall performance. To alleviate interference, only similar tasks can be combined. However, our intuitive notion of similarity between tasks might not necessarily hold in the feature space. Therefore, techniques to determine how tasks relate to each other at different layers of a multi-task are required. Existing approaches [11, 12, 13] either do not consider similarity between task representations at different layer or fail to consider the effect of combining tasks in one layer on the task representations in subsequent layers.

Progress in reducing task interference in multi-task learning has come from varied directions including custom architectures, task balancing and task grouping. Hereinafter, each of these directions are individually probed.

### Custom Architecture:

One way to alleviate task interference is to introduce task specific parameters in the shared encoder. This modification could enable the network to encode task information which might conflict with other tasks in the task specific parameters. In MTAN [2], each task is equipped with its own attention modules at different stages of the encoder. Kanakis et al. [3] use task specific 1$\times$1 convolution after each 3D convolution in the encoder. Only these 1$\times$1 convolutions are trained with the task gradients to explicitly avoid task interference. Strezoski et al. [4] propose task specific routing to create randomly initialized task specific subnetworks to reduce interference. Sun et al. [5] propose to learn task specific policies with a sharing objective and a sparsity objective to balance the number of ResNet blocks shared between tasks and task interference. These methods likely reduce conflicts on the shared parameter space. However, they require architecture modifications in the encoder and could require training on ImageNet to initialize weights.

### Task balancing:

Task interference can be seen as the consequence of conflicting task gradient directions in the shared parameters. Task gradients can be modified such that the disagreement between them is reduced to mitigate task interference. The PCGrad algorithm [6] uses cosine similarity to identify different pairs of task gradients with contradicting directions in each shared parameter. In each of these pairs, one of the gradients is projected onto the normal vector of the other to reduce conflict. Chen et al. [7] reduces the probability of using negative task gradients during backward pass thereby reducing gradient conflict. As gradients are directly modified these approaches might lose task specific information. Individual task losses can be weighted in different ways to address the variance in loss scales [2, 8, 9, 10]. These methods primarily attempt to avoid certain tasks from dominating gradient updates. Nonetheless, they can be viewed as a means to only loosely modulate task interference as they affect the extent to which tasks affect the shared parameters.

### Task grouping:

If only similar tasks are grouped together either at the network level or at a layer level, task interference can be reduced. Standley et al. [11] train several multi-task networks created with all possible combinations of tasks. They pick the combination with the lowest total loss across tasks under certain computation budget as the desired multi-task network. Fifty et al. [12] consider the relative change in the first task's loss before and after shared parameter update with second task's loss as its affinity with the second task. This affinity between different task pairs is accumulated throughout the training and tasks are grouped into different networks such that the overall affinity is maximized.

Other task grouping approaches restrict all the tasks to remain in the same network and group them layer-wise. While this restriction could increase task interference, the advantage is reduced computation. Guo et al. [13] use an automated approach based on Gumbel-Softmax sampling of connections between a child layer and a number of parent layers in a topology. After training, at every child layer, only the connection to the parent layer with highest probability is retained leading to the effect of tasks being separated at a certain layer. This separation reduces task interference. Vandenhende et al. [14] use similarity between representations of trained single task networks to determine how to group tasks at different stages in the encoder.

Other than these categories of works, efforts have also been made to study task relationships in a multi-task network [16]. Such studies can be used to draw insights which can help reduce task interference.

It is an object of the current invention to correct the short-comings of the prior art and to provide a sharing scheme in the decoder to best curb task interference while benefiting from complementary information sharing. This and other objects which will become apparent from the following disclosure, are provided with a deep-learning based computer-implemented method for multi-task learning, having the features of one or more of the appended claims.

Different from the prior art, in particular unlike Vandenhende et al. [14], the invention proposes task grouping in the decoder and proposes grouping tasks in a progressive fashion.

In a first aspect of the invention, the computer-implemented method comprises the step of progressively fusing decoders, by grouping tasks stage-by-stage based on at least one similarity between learned representations.

The inductive bias of sharing parameters among different tasks is intuitively desirable as it enables tasks to share complementary information with each other. The early layers learn general features and as we progress deeper through the network, the features learnt become increasingly task specific. There is often no clear indication as to where along the network depth, the transition between generic to task specific features happens. In dense prediction tasks, the representations learnt in the decoder for similar tasks might only diverge and become task specific in the later layers. Most of the early decoder layers could likely be shared among tasks while providing improved generalization and robustness.

In particular, the tasks at each decoder stage are at least one of semantic segmentation, edge detection, depth estimation, surface normal and autoencoder. Additionally, all decoders have the same architecture.

Advantageously, the method comprises the steps of:
- constructing a pairwise similarity matrix wherein each entity of said matrix represents a similarity between at least two tasks, wherein said similarity corresponds to a row and a column of said entity; and
- using the pairwise similarity matrix for grouping tasks in the progressive fusion of decoders.

More advantageously, method comprises the steps of listing all possible task groupings and identifying a set of groups wherein said groups cover all tasks exactly once. This feature insures that the overall affinity between different task pairs is maximized.

In a more detailed embodiment of the invention, the computer-implemented method comprises the steps of:
- training a model wherein each task of said model has its own decoder;
- calculating at least one similarity score of learned representations at a first stage of said decoder;
- constructing a new model by grouping tasks at the first decoder stage using the at least one similarity score;
- retraining the new model and grouping tasks at a second decoder stage; and
- repeating the previous steps for all decoder stages until either all the tasks have their own branch or the tasks at a final decoder stage have been grouped.

The invention is further embodied in a computer readable medium comprising an algorithm, which when loaded in a computer executes the computer implemented method as disclosed herein. In particular the invention is embodied in a computer readable medium comprising a final model which results from the disclosed computer implemented method.

Furthermore the invention is embodied in an autonomous system which is operational on basis of a final model as provided by the computer implemented method of the invention, wherein said final model is used to obtain real-time predictions from an input scene.

The invention will hereinafter be further elucidated with reference to the drawing of an exemplary embodiment of a computer-implemented method according to the invention that is not limiting as to the appended claims.

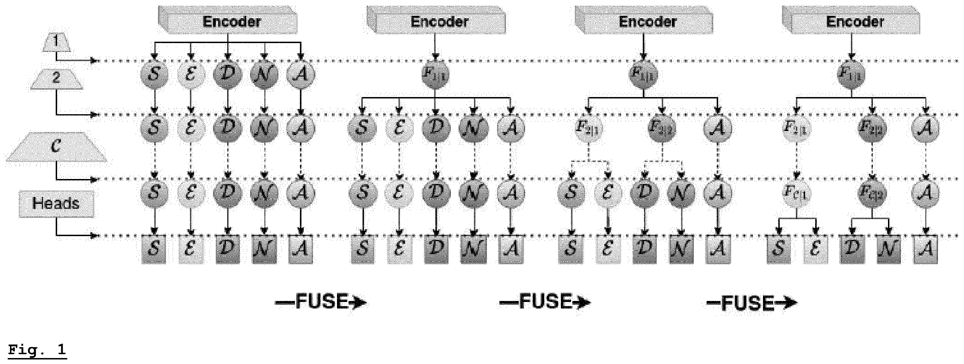

In the drawing, figure 1 shows a schematic diagram for the computer-implemented method according to the invention.

Whenever in the figures the same reference numerals are applied, these numerals refer to the same parts.

### Detailed description

### Problem setup:

Given a set of T tasks with each having its own decoder D_T, we intend to combine the decoders while incurring limited task interference. All the decoders have the same architecture. We consider C candidate stages D_{_1|t}, D_{_2|t} ,...., D_{_c|t} where the task decoders can be combined. We refer to combining decoders as fusion.

### Representation Similarity:

In multi-task learning, a well-accepted notion is that jointly learning similar tasks would improve overall performance. This notion is intuitively well placed as similar tasks would need similar feature representations which can be attained by sharing parameters instead of using individual networks. However, this notion does not necessarily have to be only at the network level (each task group split into separate networks) but can also be used to combine tasks across the network depth [13, 14].

Two tasks can be combined at a particular candidate stage of the multi-task network if they require learning similar representations at that stage. Central Kernel Alignment (CKA) is a similarity metric with desirable properties such as invariance to orthogonal transformations and isotropic scaling enabling meaningful comparisons of learnt representations [15]. At a particular decoder stage, we quantify the pairwise similarity between the representations of all task decoders using CKA. Specifically, given decoder activations {D_{_c|1}, ...., D_{_C|T}} at candidate stage C, we construct a pairwise CKA similarity matrix of shape TxT where each entity represents similarity between the tasks corresponding to the row and column of the entity. Since CKA is symmetric, i.e., the resultant similarity matrix is also symmetric. This pairwise similarity matrix is used for task grouping in the progressive decoder fusion discussed in the next section.

### Similarity guided Progressive Decoder Fusion:

In the previous section, we saw that CKA can be used to quantify the similarity between two learned representations. Equipped with this tool, we now look at principled means to arrive at a decoder sharing scheme which provides the best generalization and robustness. To group tasks at a layer, based on the similarity scores obtained using validation data, we use the grouping algorithm provided by Fifty et al. [12]. Essentially, this algorithm lists all possible task groupings and identifies a set of groups which cover all tasks exactly once such that the overall similarity is maximized.

We first train a model where each of the tasks has its own decoder and calculate the similarity of learned representations at the first candidate stage of the decoder. With the similarity scores we group tasks at the first decoder stage. This new model is retrained and grouping is done at the second decoder stage. We repeat this process for all decoder stages. This procedure is schematically depicted in the following figure. Every "Fuse" operation indicates grouping tasks at a particular candidate stage. After the fuse, we fully train the new model until convergence. This new model is fused in the next stage and so on until the final stage has been fused.

Figure 1 shows how the decoders are fused at different candidate stages. From left to right decoder fusion at candidate stages 1, 2 and C is shown. *S, E, D,* N and A denote semantic segmentation, edge detection, depth estimation, surface normal and autoencoder. The dotted horizontal lines sow the candidate decoder stages and the task specific heads. The lines connecting the decoder stages in 2 and C are dotter to show that there are more stages in between. The task specific heads are not fused together in any of the approaches. F denotes fused decoder and *F*_{i|j} denotes i^{th} candidate stage of j^{th} task decoder.

The following algorithm outlines the progressive decoder fusion method according to the invention:

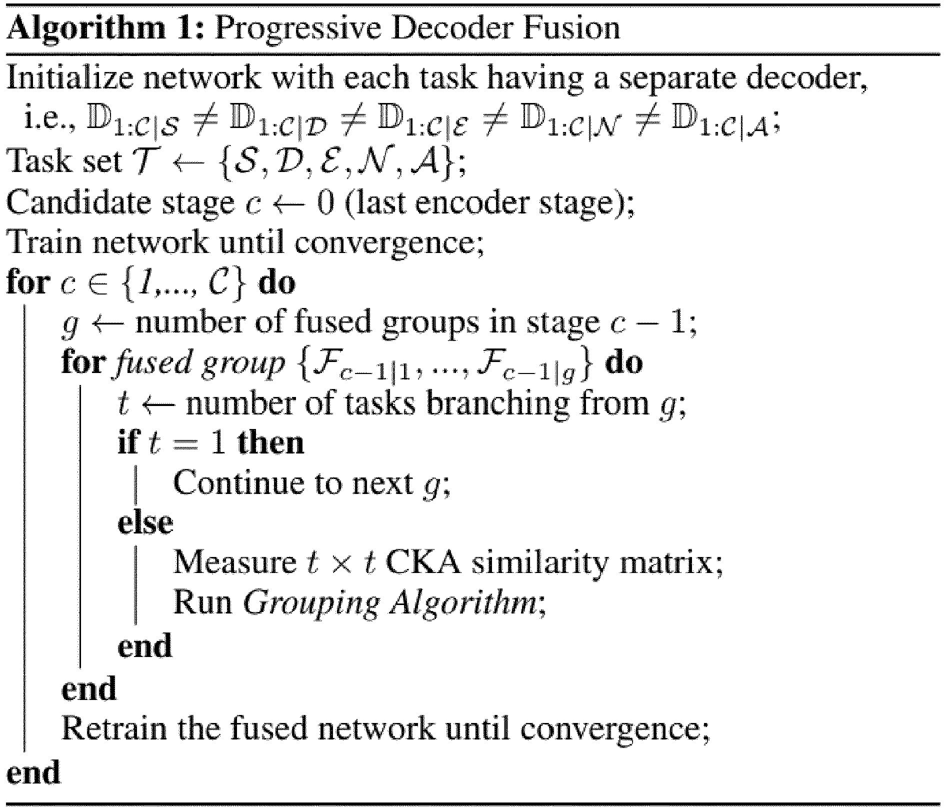

Embodiments of the present invention can include every combination of features that are disclosed herein independently from each other. Although the invention has been discussed in the foregoing with reference to an exemplary embodiment of the method of the invention, the invention is not restricted to this particular embodiment which can be varied in many ways without departing from the invention. The discussed exemplary embodiment shall therefore not be used to construe the appended claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

Variations and modifications of the present invention will be obvious to those skilled in the art and it is intended to cover in the appended claims all such modifications and equivalents. The entire disclosures of all references, applications, patents, and publications cited above are hereby incorporated by reference. Unless specifically stated as being "essential" above, none of the various components or the interrelationship thereof are essential to the operation of the invention. Rather, desirable results can be achieved by substituting various components and/or reconfiguration of their relationships with one another.

Optionally, embodiments of the present invention can include a general or specific purpose computer or distributed system programmed with computer software implementing steps described above, which computer software may be in any appropriate computer language, including but not limited to C++, FORTRAN, ALGOL, BASIC, Java, Python, Linux, assembly language, microcode, distributed programming languages, etc. The apparatus may also include a plurality of such computers / distributed systems (e.g., connected over the Internet and/or one or more intranets) in a variety of hardware implementations. For example, data processing can be performed by an appropriately programmed microprocessor, computing cloud, Application Specific Integrated Circuit (ASIC), Field Programmable Gate Array (FPGA), or the like, in conjunction with appropriate memory, network, and bus elements. One or more processors and/or microcontrollers can operate via instructions of the computer code and the software is preferably stored on one or more tangible non-transitive memory-storage devices.

### References

1. Chengzhi Mao, Amogh Gupta, Vikram Nitin, Baishakhi Ray, Shuran Song, Junfeng Yang, and Carl Vondrick. Multitask learning strengthens adversarial robustness. In Computer Vision-ECCV 2020-16th European Conference, Glasgow, UK, August 23-28, 2020, Proceedings, Part II, volume 12347 of Lecture Notes in Computer Science, pp. 158-174. Springer, 2020.
2. Shikun Liu, Edward Johns, and Andrew J. Davison. End-to-end multi-task learning with attention. 2019 IEEE/CVF Conference on Computer Vision and Pattern Recognition (CVPR), pp. 1871-1880, 2019.
3. Menelaos Kanakis, David Bruggemann, Suman Saha, Stamatios Georgoulis, Anton Obukhov, and Luc Van Gool. Reparameterizing convolutions for incremental multi-task learning without task interference. In Andrea Vedaldi, Horst Bischof, Thomas Brox, and Jan-Michael Frahm (eds.), Computer Vision-ECCV 2020, pp. 689-707, Cham, 2020. Springer International Publishing. ISBN 978-3-030-58565-5.
4. Gjorgji Strezoski, Nanne van Noord, and Marcel Worring. Many task learning with task routing. In Proceedings of the IEEE/CVF International Conference on Computer Vision (ICCV), October 2019.
5. Ximeng Sun, Rameswar Panda, Rogerio Feris, and Kate Saenko. Adashare: Learning what to share for efficient deep multitask learning. Advances in Neural Information Processing Systems, 33, 2020.
6. Tianhe Yu, Saurabh Kumar, Abhishek Gupta, Sergey Levine, Karol Hausman, and Chelsea Finn. Gradient surgery for multitask learning. In H. Larochelle, M. Ranzato, R. Hadsell, M. F. Balcan, and H. Lin (eds.), Advances in Neural Information Processing Systems, volume 33, pp. 5824-5836. Curran Associates, Inc., 2020.
7. Zhao Chen, Jiquan Ngiam, Yanping Huang, Thang Luong, Henrik Kretzschmar, Yuning Chai, and Dragomir Anguelov. Just pick a sign: Optimizing deep multitask models with gradient sign dropout. In H. Larochelle, M. Ranzato, R. Hadsell, M. F. Balcan, and H. Lin (eds.), Advances in Neural Information Processing Systems, volume 33, pp. 2039-2050. Curran Associates, Inc., 2020.
8. Alex Kendall, Yarin Gal, and Roberto Cipolla. Multi-task learning using uncertainty to weigh losses for scene geometry and semantics. 2018 IEEE/CVF Conference on Computer Vision and Pattern Recognition, pp. 7482-7491, 2018.
9. Michelle Guo, Albert Haque, De-An Huang, Serena Yeung, and Li Fei-Fei. Dynamic task prioritization for multitask learning. In ECCV, 2018.
10. Zhao Chen, Vijay Badrinarayanan, Chen-Yu Lee, and Andrew Rabinovich. Gradnorm: Gradient normalization for adaptive loss balancing in deep multitask networks. In ICML, 2018.
11. Trevor Scott Standley, Amir Roshan Zamir, Dawn Chen, Leonidas J. Guibas, Jitendra Malik, and Silvio Savarese. Which tasks should be learned together in multi-task learning? In ICML, 2020.
12. Christopher Fifty, Ehsan Amid, Zhe Zhao, Tianhe Yu, Rohan Anil, and Chelsea Finn. Efficiently identifying task groupings for multi-task learning. In A. Beygelzimer, Y. Dauphin, P. Liang, and J. Wortman Vaughan (eds.), Advances in Neural Information Processing Systems, 2021.
13. Pengsheng Guo, Chen-Yu Lee, and Daniel Ulbricht. Learning to branch for multi-task learning. In Hal Daum e III and Aarti Singh (eds.), Proceedings of the 37th International Conference on Machine Learning, volume 119 of Proceedings of Machine Learning Research, pp. 3854-3863. PMLR, 13-18 Jul 2020.
14. S. Vandenhende, S. Georgoulis, B. De Brabandere, and L. Van Gool. Branched Multi-Task Networks: Deciding What Layers To Share. In BMVC, 2020.
15. Simon Kornblith, Mohammad Norouzi, Honglak Lee, and Geoffrey Hinton. Similarity of neural network representations revisited. In Kamalika Chaudhuri and Ruslan Salakhutdinov (eds.), Proceedings of the 36th International Conference on Machine Learning, volume 97 of Proceedings of Machine Learning Research, pp. 3519-3529. PMLR, 09-15 Jun 2019.
16. Naresh Kumar Gurulingan, Elahe Arani, and Bahram Zonooz. UniNet: A unified scene understanding network and exploring multi-task relationships through the lens of adversarial attacks. In Proceedings of the IEEE/CVF International Conference on Computer Vision (ICCV) Workshops, pp. 2239-2248, October 2021.

## Claims

1. Deep-learning based computer-implemented method for multi-task learning, wherein said method comprises the step of progressively fusing decoders, by grouping tasks stage-by-stage based on a pairwise similarity matrix between learned representations of different task decoders.

2. The computer-implemented method of claim 1, wherein the tasks at each decoder stage are at least one of semantic segmentation, edge detection, depth estimation, surface normal and autoencoder.

3. The computer-implemented method of claim 1 or 2, wherein all decoders have the same architecture.

4. The computer-implemented method of any one of the preceding claims, wherein said method comprises the steps of:
- constructing a pairwise similarity matrix wherein each entity of said matrix represents a similarity between two tasks, wherein said similarity corresponds to the tasks of a row and a column of said entity;
- using the pairwise similarity matrix for grouping tasks in the progressive fusion of decoders.

5. The computer-implemented method of any one of the preceding claims, wherein said method comprises the steps of listing all possible task groupings and identifying a set of groups wherein said groupings cover all tasks exactly once.

6. The computer-implemented method of anyone of the preceding claims, wherein said method comprises the steps of:
- training a model wherein each task of said model has its own decoder;
- calculating the pairwise similarity matrix of learned representations of different tasks at a first stage of said decoder;
- constructing a new model by grouping tasks at the first decoder stage using the at least one similarity score;
- retraining the new model and grouping tasks at a second decoder stage;
- repeating the previous steps for all decoder stages until either each task has its own branch or until the tasks at a final decoder stage have been grouped.

7. Computer readable medium comprising an algorithm, which when loaded in a computer executes the computer implemented method according to any one of claims 1-6.

8. Computer readable medium according to claim 7, comprising a final model which results from the computer implemented method.

9. Autonomous system operational on basis of a final model as provided by the computer implemented method of any one of claims 1-6, wherein said final model is used to obtain real-time predictions from an input scene.

## Amended claims

### Amended claims in accordance with Rule 137(2) EPC.

**1.** Deep-learning based computer-implemented method for multi-task learning, wherein said method comprises the step of progressively fusing decoders by grouping tasks, decoder stage by decoder stage, based on a pairwise similarity matrix between learned representations of different task decoders.

**2.** The computer-implemented method of claim 1, wherein the tasks at each decoder stage are at least one of semantic segmentation, edge detection, depth estimation, surface normal and autoencoder.

**3.** The computer-implemented method of claim 1 or 2, wherein all decoders have the same architecture.

**4.** The computer-implemented method of any one of the preceding claims, wherein said method comprises the steps of:
- constructing a pairwise similarity matrix wherein each entity of said matrix represents a similarity between two tasks, wherein said similarity corresponds to the tasks of a row and a column of said entity;
- using the pairwise similarity matrix for grouping tasks in the progressive fusion of decoders.

**5.** The computer-implemented method of any one of the preceding claims, wherein said method comprises the steps of listing all possible task groupings and identifying a set of groups wherein said groupings cover all tasks exactly once.

**6.** The computer-implemented method of anyone of the preceding claims, wherein said method comprises the steps of:
- training a model wherein each task of said model has its own decoder;
- calculating the pairwise similarity matrix of learned representations of different tasks at a first stage of said decoder;
- constructing a new model by grouping tasks at the first decoder stage using the at least one similarity matrix;
- retraining the new model and grouping tasks at a second decoder stage;
- repeating the previous steps for all decoder stages until each task branches from its own decoder stage or until the tasks at a final decoder stage have been grouped.

**7.** Computer readable medium comprising an algorithm, which when loaded in a computer executes the computer implemented method according to any one of claims 1-6.

**8.** Computer readable medium according to claim 7, comprising a final model which results from the computer implemented method.

**9.** Autonomous system operational on basis of a final
model as provided by the computer implemented method of any one of claims 1-6, wherein said final model is used to obtain real-time predictions from an input scene.

**1.** Deep-learning based computer-implemented method for multi-task learning, wherein said method comprises the step of progressively fusing decoders by grouping tasks, decoder stage by decoder stage, based on a pairwise similarity matrix between learned representations of different task decoders wherein the tasks at each decoder stage are at least one of semantic segmentation, edge detection, depth estimation, surface normal and autoencoder, and wherein said method comprises the steps of:
- training a model wherein each task of said model has its own decoder;
- calculating the similarity matrix of learned representations of different tasks at a first stage of said decoder;
- constructing a new model by grouping tasks at the first decoder stage using the at least similarity matrix;
- retraining the new model and grouping tasks at a second decoder stage;
- repeating the previous steps for all decoder stages until each task branches from its own decoder stage or until the tasks at a final decoder stage have been grouped.

**2.** The computer-implemented method of claim 1 or 2, wherein all decoders have the same architecture.

**3.** The computer-implemented method of any one of the preceding claims, wherein said method comprises the steps of:
- constructing a pairwise similarity matrix wherein each entity of said matrix represents a similarity between two tasks, wherein said similarity corresponds to the tasks of a row and a column of said entity;
- using the pairwise similarity matrix for grouping tasks in the progressive fusion of decoders.

**4.** The computer-implemented method of any one of the preceding claims, wherein said method comprises the steps of listing all possible task groupings and identifying a set of groups wherein said groupings cover all tasks exactly once.

**5.** Computer readable medium comprising an algorithm, which when loaded in a computer executes the computer implemented method according to any one of claims 1-4.

**6.** Computer readable medium according to claim 7, comprising a final model which results from the computer implemented method.

**7.** Autonomous system operational on basis of a final
model as provided by the computer implemented method of any one of claims 1-4, wherein said final model is used to obtain real-time predictions from an input scene.
